(19) **Europäisches Patentamt**

**European Patent Office**

**Office européen des brevets**

(11) **EP 0 713 350 B1**

(12) **FASCICULE DE BREVET EUROPEEN**

(45) Date de publication et mention
de la délivrance du brevet:
**17.05.2000 Bulletin 2000/20**

(51) Int Cl.⁷: **H05B 6/12**, H05B 6/06

(21) Numéro de dépôt: **95402524.3**

(22) Date de dépôt: **10.11.1995**

(54) **Foyer de cuisson à inducteur protégé en température**

Induktionskochstelle mit temperaturgeschütztem Induktor

Induction cooking surface with temperature protected inductor

(84) Etats contractants désignés:
**DE FR NL**

(30) Priorité: **15.11.1994 FR 9413652**

(43) Date de publication de la demande:
**22.05.1996 Bulletin 1996/21**

(73) Titulaire: **COMPAGNIE EUROPEENNE
POUR L'EQUIPEMENT MENAGER "CEPEM"
F-45140 St Jean-de-la-Ruelle (FR)**

(72) Inventeur: **Gaspard, Jean-Yves
F-92402 Courbevoie Cedex (FR)**

(74) Mandataire: **Beylot, Jacques
Thomson-CSF Propriété Intellectuelle,
13, Avenue du Président Salvador Allende
94117 Arcueil Cédex (FR)**

(56) Documents cités:
**EP-A- 0 209 215          GB-A- 2 201 319**

• **PATENT ABSTRACTS OF JAPAN vol. 018 no.
063 (E-1500) ,2 Février 1994 & JP-A-05 283154
(FUJI MC:KK) 29 Octobre 1993,**

## Description

La présente invention a pour objet un foyer de cuisson à induction dont l'inducteur est protégé en température.

Dans les tables de cuisson à induction, chaque foyer de cuisson comporte généralement un inducteur disposé sous la plaque en vitrocéramique sur laquelle on dispose les récipients, et alimenté par un générateur délivrant un courant haute fréquence. L'inducteur est classiquement constitué d'une ou de plusieurs bobines en fils conducteurs, par exemple cuivre, qui vont s'échauffer lors du fonctionnement.

Les bobines actuelles, en fils divisés pour les applications haute fréquence, peuvent supporter des températures d'échauffements inférieures à une température critique, typiquement de l'ordre de 200°C, au-delà de laquelle elles subissent des détériorations des isolations entre fils. Il est connu de prévoir, au niveau de la bobine, notamment en son centre, un capteur de température, par exemple une thermistance, pour prévenir des dépassements en température. Cependant, ce type de capteur ponctuel a une action très localisée qui ne prend pas en compte toute la surface de l'inducteur. Par ailleurs, si le capteur ne fonctionne pas correctement, il existe des situations dans lesquelles la température critique peut être atteinte, voire dépassée. C'est le cas notamment lorsqu'un récipient vide est placé au-dessus d'un inducteur alimenté en courant, ou lorsque les aliments à cuire nécessitent une friture.

Il est donc important de prévoir un système permettant l'arrêt du générateur, ou une diminution de la puissance délivrée par ce générateur, lorsque l'échauffement d'un inducteur est proche de sa température critique.

Par ailleurs, comme le montre notamment la demande européenne de brevet EP-A-0 158 353, les foyers de cuisson à induction connus à l'heure actuelle possèdent généralement un circuit magnétique situé sous l'inducteur, dont le rôle est de concentrer le champ magnétique généré par l'inducteur vers les récipients à chauffer, de façon à optimiser le chauffage, et à minimiser les perturbations induites.

Il est déjà connu d'utiliser ce circuit magnétique pour protéger l'inducteur en température:

Le document FR 2.620.894 notamment décrit un système de protection en température d'un inducteur utilisant un circuit magnétique constitué de noyaux de ferrites disposés radialement sur le côté inférieur de l'inducteur, dans lequel les noyaux de ferrites sont choisis de manière à ce que leur température de Curie se situe un peu en-dessous de la température critique. Ainsi, lorsque la température des ferrites atteint la température de Curie, les ferrites perdent brusquement leur propriété magnétique, et la puissance utile sur l'ustensile de cuisson chute rapidement, évitant de ce fait une surchauffe de l'inducteur.

Un tel système présente les inconvénients suivants :

La température de Curie des matériaux ferrites de puissance (par exemple : manganèse-zinc) est supérieure à 200°C, ce qui est déjà au-dessus de la température critique pour les inducteurs constitués de fils divisés utilisés en haute fréquence.

Par ailleurs, le passage par la température de Curie provoque un arrêt brutal du système, et peut présenter en outre une forte hystérésis. Par conséquent, il peut être nécessaire d'attendre, pendant une durée assez longue, que le système fonctionne à nouveau, même si la température de l'inducteur est descendue jusqu'à une température admissible.

On connaît également par la demande européenne de brevet EP-A-0 209 215 des systèmes de régulation en température d'un élément ferromagnétique utilisé par exemple comme panne de fer à souder. Dans l'un de ces systèmes, l'élément ferromagnétique est soumis à une induction magnétique au moyen d'un enroulement auxiliaire et chauffé par un courant électrique qui le traverse et lui est appliqué par l'intermédiaire d'un relais contrôlé par un capteur d'induction magnétique. Le capteur d'induction magnétique placé sur l'élément ferromagnétique provoque l'ouverture du relais chaque fois qu'il détecte une chute de perméabilité dans l'élément ferromagnétique consécutive au dépassement de sa température de Curie. Dans les autres systèmes, l'élément ferromagnétique sert de charge à une source de courant haute fréquence qui le chauffe, des moyens détectant la chute d'impédance de l'élément ferromagnétique consécutive au dépassement de la température de Curie pour provoquer une coupure ou une réduction du courant de la source haute fréquence

La présente invention a pour but de pallier les inconvénients précités.

Plus précisément, l'invention a pour objet un foyer de cuisson à induction du type comportant au moins un inducteur fournissant l'énergie électromagnétique de chauffage, un générateur délivrant un courant haute fréquence pour alimenter l'inducteur, et un circuit magnétique situé sous l'inducteur, le foyer de cuisson étant caractérisé en ce que le circuit magnétique présente une réluctance calibrée de façon à ce qu'il sature à partir d'une température prédéterminée inférieure à la température maximum admissible pour l'inducteur, et en ce qu'il comporte en outre :

- des moyens distincts de l'inducteur, provoquant une augmentation de l'appel de courant dans l'inducteur au-delà d'une valeur limite, dès lors que le circuit magnétique sature ;
- des moyens de régulation détectant l'augmentation de l'appel de courant dans l'inducteur au-delà de la valeur limite et limitant alors la puissance délivrée à l'inducteur.

Le fonctionnement d'un tel foyer à induction, dans le but de protéger l'inducteur en température, sera mieux compris, de même que d'autres caractéristiques de l'invention, au vu de la description suivante faite en référence aux figures annexées, représentant un mode de réalisation préférentiel mais non limitatif du foyer selon l'invention, et dans lesquelles :

- La figure 1 représente, en coupe, les éléments mécaniques d'un foyer inducteur conforme à l'invention ;
- La figure 2 illustre, à titre d'exemple et sous forme simplifiée, les éléments constitutifs d'un générateur pour un foyer inducteur conforme à l'invention ;
- La figure 3 illustre, en vue éclatée, différentes composantes d'un foyer inducteur dans une variante préférée de l'invention ;
- La figure 4 illustre, sous forme assemblée, les composantes de la figure 4 ;
- La figure 5 illustre en coupe un exemple de support pour inducteur.

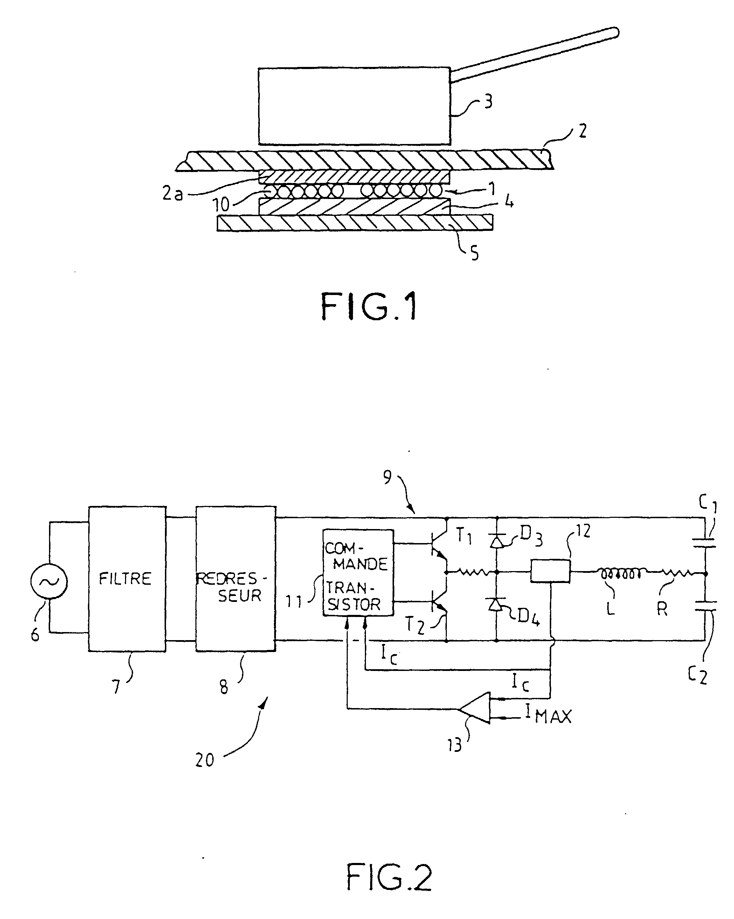

La figure 1 illustre schématiquement, en coupe, les éléments mécaniques d'un foyer de cuisson à induction selon l'invention :

Un tel foyer comporte classiquement un inducteur 1, constitué par exemple de torons 10 de fils de cuivre enroulés concentriquement sous la forme d'une spirale. L'inducteur 1 est placé sous une plaque de travail 2, par exemple en vitrocéramique, sur laquelle on place le récipient 3 à chauffer. L'inducteur 1 est de préférence séparé de la plaque de travail 2 par l'intermédiaire d'une couche 2a en matériau isolant thermique. L'inducteur 1 est alimenté par un générateur (non représenté) délivrant un courant haute fréquence, dont nous détaillerons un fonctionnement possible en référence à la figure 2. Le foyer comporte également un circuit magnétique 4, placé sous l'inducteur 1, dont le rôle principal est de focaliser les lignes de champs magnétiques générées par l'inducteur 1 vers le récipient 3.

La présente invention repose sur une caractéristique particulière des circuits magnétiques, à savoir qu'ils possèdent une valeur d'induction à saturation $B_s$ qui diminue graduellement lorsque la température augmente bien avant que ne soit atteinte la température de Curie.

L'invention consiste à calibrer la réluctance du circuit magnétique de façon à obtenir les deux effets suivants :

- En fonctionnement normal, à une température inférieure à une température critique déterminée en fonction des propriétés de l'isolant de la bobine de l'inducteur, le rôle de focalisation du champ magnétique par le circuit magnétique est optimal, c'est-à-dire qu'il n'y a pas de saturation.
- En fonctionnement critique, c'est-à-dire pour une température du circuit magnétique prédéterminée, inférieure à la température critique de l'inducteur, le circuit magnétique sature.

Par ailleurs, le foyer selon l'invention comporte des moyens 5 qui engendrent une augmentation de l'appel de courant dans l'inducteur 1 lorsque le circuit magnétique est en saturation. Ces moyens sont avantageusement constitués par une plaque 5 en matériau amagnétique et conducteur électrique, tel que l'aluminium, disposée sous le circuit magnétique 4. Lorsque l'induction à saturation $B_s$ du circuit magnétique est atteinte, la présence de cette plaque en aluminium a pour effet de faire chuter l'impédance de la charge alimentée par le générateur. Il s'ensuit une augmentation du courant dans l'inducteur. Des moyens de régulation venant limiter la valeur du courant dans l'inducteur interviennent alors, selon l'invention, pour contrecarrer cette augmentation de courant, et protéger de ce fait l'inducteur en température, en contrôlant le générateur pour qu'il délivre une puissance moindre dans l'inducteur.

Ces moyens de régulation peuvent faire partie intégrante de l'électronique du générateur, comme nous allons à présent le voir en référence à la figure 2 qui illustre, sous forme simplifiée, une structure de générateur possible pour alimenter le foyer inducteur précédent :

Le secteur d'alimentation 6 délivre un signal alternatif à basse fréquence, par exemple à 50 Hz, qui est filtré dans un filtre 7 haute fréquence et redressé par des moyens de redressement 8. La tension redressée ainsi obtenue est appliquée à un onduleur à résonance 9 dont on rappelle ci-après le fonctionnement général :

L'onduleur comporte principalement deux transistors bipolaires $T_1$, $T_2$, sur lesquels sont montés en parallèle, comme indiqué sur la figure, deux diodes de roue libre $D_3$ $D_4$ et deux condensateurs $C_1$ et $C_2$. La charge alimentée par l'onduleur, constituée par l'inducteur 1 et éventuellement par le récipient 3 placé sur l'inducteur, est symbolisée par l'association série d'une inductance L et d'une résistance R.

Des moyens de commande 11 non détaillés contrôlent les transistors $T_1$ et $T_2$ de manière à ce qu'ils soient alternativement conducteurs. Lorsque le transistor $T_1$ conduit, on vient charger le condensateur $C_2$ par l'inducteur (L, R) à une fréquence fonction de la valeur de L et de $C_2$. Si $I_c$ représente l'intensité efficace du courant présent dans la charge, la puissance dissipée est égale à $RI_c^2$. Lorsque le courant $I_c$, dont la valeur est prélevée par des moyens 12, par exemple un transformateur de courant, s'annule, les moyens de commande 11 contrôlent la conduction du transistor $T_2$, et le condensateur $C_1$ est à son tour chargé à travers l'inducteur L, R.

On obtient par conséquent, dans la charge L, R, un courant quasi-sinusoïdal dont la fréquence est liée à la valeur de L, et la puissance est liée à la valeur de R.

Les différents composants du générateur sont calibrés de manière à fonctionner pour une puissance nominale donnée du générateur, par exemple de 2,8 kW, avec une charge correspondant à un récipient de grand diamètre, caractérisée par une valeur de R, par exemple 3 Ohms, et une valeur de L, par exemple 50 micro-Henrys, à 25 KHz.

Comme nous l'avons vu précédemment, lorsque le circuit magnétique 4 sature, la valeur de l'impédance (L, R) décroît en raison de la présence de la plaque 5. Le courant dans la charge augmente en conséquence faisant intervenir un circuit de limitation. Celui-ci grâce à une comparaison de la valeur du courant instantané dans la charge avec une valeur crête limite $I_{max}$ atteinte lors de la saturation du circuit magnétique, via par exemple un comparateur 13, permet alors de réduire la puissance fournie par l'onduleur en bloquant dans ce dernier le transistor en conduction à chaque fois que la valeur du courant instantané dans la charge a tendance à dépasser la valeur crête limite $I_{max}$. Cela a pour effet de faire chuter la température de l'inducteur. La température du circuit magnétique diminuant par la même occasion, le fonctionnement redevient rapidement normal, hors saturation.

On peut remarquer que la plaque en aluminium 5 fait également office de blindage contre les perturbations conduites ou rayonnées par l'inducteur. Pour éviter qu'une telle plaque ne génère elle-même des perturbations, elle est reliée avantageusement au secteur 6 par l'intermédiaire du filtre 7 du générateur, préférentiellement par l'intermédiaire d'un condensateur.

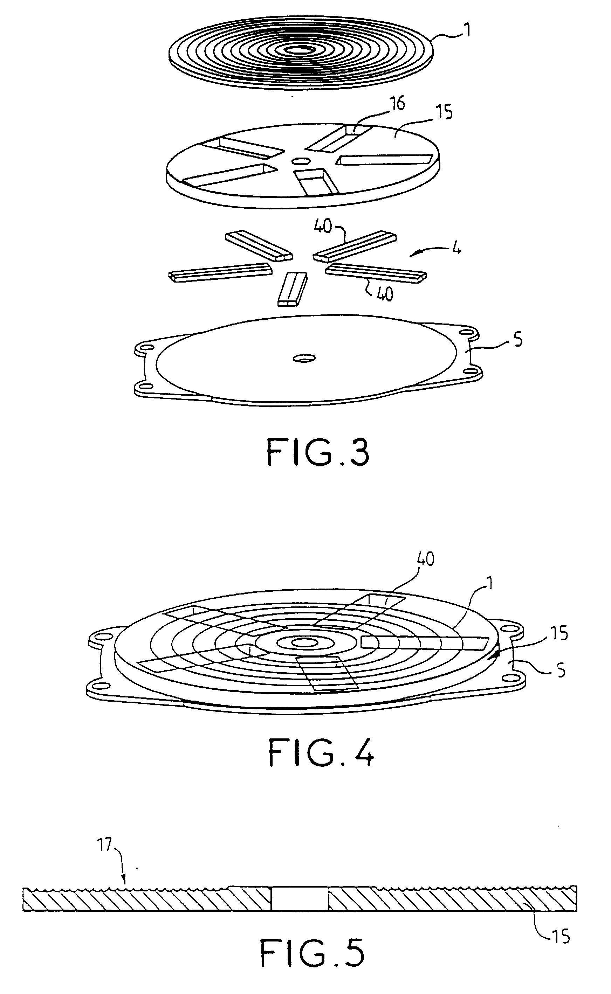

Sur les figures 3 et 4, on a représenté les éléments constitutifs d'un foyer induction dans un mode de réalisation préférentiel conforme à l'invention, sans générateur, respectivement en vue éclatée et en mode assemblé :

Sur ces figures, les éléments communs avec les autres figures portent les mêmes références. Dans ce cas particulier, le foyer inducteur comporte un support 15 comprenant des fentes 16, disposées par exemple radialement. Les fentes sont destinées à recevoir et maintenir le circuit magnétique 4 qui se présente sous forme d'une pluralité de barreaux de ferrites 40. La calibration de la réluctance du circuit magnétique s'effectue dans ce cas précis en optimisant le volume total de ferrite utilisé. Le choix de ferrites permet également de calibrer la réluctance.

Avantageusement, le support 15 est en matériau thermiquement conducteur, de façon à permettre une évacuation de la chaleur accumulée sur l'inducteur vers la plaque en aluminium 5. Le support peut notamment être un plastique chargé d'une matière conductrice thermique (par exemple un vinylester chargé de graphite ou d'oxyde métallique tel que l'alumine, ou un ciment réfractaire à base de poudre de magnésie).

Pour améliorer le couplage thermique entre l'inducteur 1 et le support 15 en matériau conducteur thermique, on peut envisager de poser l'inducteur non plus simplement sur la surface du support, mais dans une spirale imprimée directement sur la surface de ce support. Sur la figure 5, on a représenté en coupe un tel support 15 sur la surface duquel une spirale 17 a été imprimée.

Enfin, une autre variante possible d'un foyer de cuisson conforme à l'invention consiste à conférer au support, outre sa fonction de supporter l'inducteur, la fonction de circuit magnétique. A cet effet, l'ensemble support 15-barreaux de ferrite 40 est remplacé par un support plein, par exemple en forme de disque, dont le matériau est une poudre de fer ou de ferrites, liée par exemple par un plastique. Dans le cas où le matériau choisi est également un bon conducteur thermique (poudre de ferrite), on peut également imprimer directement une spirale sur le dessus du support dans le but d'accueillir l'inducteur et d'améliorer le transfert thermique. Dans cette autre variante, la réluctance est calibrée par le choix du matériau magnétique et par l'optimisation du volume total. Il est possible notamment, si l'on souhaite augmenter la réluctance pour un support donné, d'effectuer des trous dans ce support.

Un foyer de cuisson à induction conforme à l'invention, dans ses multiples variantes de réalisation décrites précédemment, présente notamment, par rapport à l'art antérieur, l'avantage de permettre une régulation de la température de l'inducteur et non plus un arrêt brutal du système. En effet, lorsque le circuit magnétique sature, l'augmentation du courant dans l'inducteur est progressive. Par ailleurs, l'état de saturation du circuit magnétique ne présente aucune hystérésis. Ainsi, dès que la température du circuit magnétique passe à nouveau sous le seuil de saturation, le foyer revient en fonctionnement normal.

## Revendications

1. Foyer de cuisson à induction du type comportant au moins un inducteur (1) fournissant l'énergie électromagnétique de chauffage, un générateur (20) délivrant un courant haute fréquence pour alimenter l'inducteur, et un circuit magnétique (4) situé sous l'inducteur, le foyer de cuisson étant caractérisé en ce que le circuit magnétique présente une réluctance calibrée de façon à ce qu'il sature à partir d'une température prédéterminée inférieure à la température maximum admissible pour l'inducteur, et en ce qu'il comporte en outre :

   • des moyens (5) distincts de l'inducteur, provoquant une augmentation de l'appel du courant dans l'inducteur au-delà d'une valeur limite, dès lors que le circuit magnétique sature ;
   • des moyens (11, 13) de régulation détectant l'augmentation de l'appel de courant dans l'inducteur au-delà de la valeur limite et limitant alors la puissance délivrée à l'inducteur.

2. Foyer de cuisson à induction selon la revendication 1, caractérisé en ce que les moyens engendrant une augmentation de courant sont constitués par une plaque en matériau amagnétique et conducteur électrique disposée sous le circuit magnétique.

3. Foyer de cuisson à induction selon la revendication 2, caractérisé en ce que la plaque est en aluminium.

4. Foyer de cuisson à induction selon l'une quelconque des revendications précédentes, caractérisé en ce qu'il comporte en outre un support (15) d'inducteur comprenant des fentes (16), et en ce que le circuit magnétique est constitué d'une pluralité de barreaux (40) de ferrites disposés dans les fentes, la réluctance étant calibrée par le volume total de ferrite utilisé, et par le type de ferrites utilisées.

5. Foyer de cuisson à induction selon les revendications 2 et 4, caractérisé en ce que le support (15) est en matériau conducteur thermique de façon à permettre un transfert calorifique entre l'inducteur et la plaque.

**Patentansprüche**

1. Induktionskochstelle vom Typ mit WENIGSTENS einem Induktor (1), der die elektromagnetische Heizenergie liefert, einem Generator (20), der einen Hochfrequenzstrom abgibt, um den Induktor zu speisen, und einem magnetischen Kreis (4), der sich unter dem Induktor befindet, wobei die Kochstelle dadurch gekennzeichnet ist, daß der magnetische Kreis einen magnetischen Widerstand aufweist, der so kalibriert ist, daß er ab einer vorbestimmten Temperatur, die unter der für den Induktor maximal zulässigen Temperatur liegt, Sättigung erlangt, und daß sie ferner enthält:

   - Mittel (5), die sich vom Induktor unterscheiden und einen Anstieg des Strombedarfs im Induktor über einen Grenzwert hinaus hervorrufen, sobald der magnetische Kreis Sättigung erlangt,
   - Mittel (11, 13) zum Regulieren, die den Anstieg des Strombedarfs im Induktor über den Grenzwert hinaus erfassen und dann die dem Induktor gelieferte Leistung begrenzen.

2. Induktionskochstelle nach Anspruch 1, dadurch gekennzeichnet, daß die Mittel zum Erzeugen eines Stromanstiegs aus einer Platte aus nichtmagnetischem und elektrisch leitendem Material bestehen, die unter dem magnetischen Kreis angeordnet ist.

3. Induktionskochstelle nach Anspruch 2, dadurch gekennzeichnet, daß die Platte aus Aluminium besteht.

4. Induktionskochstelle nach einem der vorhergehenden Ansprüche, dadurch gekennzeichnet, daß sie ferner einen mit Schlitzen (16) versehenen Induktorträger (15) enthält, und daß der magnetische Kreis aus einer Mehrzahl von Ferritstäben (40) besteht, die in den Schlitzen angeordnet sind, wobei der magnetische Widerstand durch das Gesamtvolumen des verwendeten Ferrits und durch die Art der verwendeten Ferrite kalibriert wird.

5. Induktionskochstelle nach einem der Ansprüche 2 und 4, dadurch gekennzeichnet, daß der Träger (15) aus thermisch leitendem Material besteht, so daß zwischen dem Induktor und der Platte eine Wärmeübertragung stattfinden kann.

**Claims**

1. Induction cooking surface of the type comprising at least one inductor (1) providing electromagnetic heating energy, a generator (20) delivering a high-frequency current for supplying the inductor, and a magnetic circuit (4) located beneath the inductor, the cooking surface being characterized in that the magnetic circuit has a reluctance calibrated so that it saturates above a predetermined temperature below the maximum permissible temperature for the inductor, and in that it furthermore comprises:

   - means (5), separate from the inductor, which cause a surge in the flow of current into the inductor above a limiting value as soon as the magnetic circuit saturates
   - control means (11, 13) which detect the surge in the flow of current into the inductor above the limiting value and then limit the power delivered to the inductor.

2. Induction cooking surface according to Claim 1, characterized in that the means generating the current surge consist of a plate made of a non-magnetic and electrically conducting material placed beneath the magnetic circuit.

3. Induction cooking surface according to Claim 2, characterized in that the plate is made of aluminium.

4. Induction cooking surface according to any one of the preceding claims, characterized in that it furthermore comprises an inductor support (15) which includes slots (16) and in that the magnetic circuit consists of a plurality of ferrite bars (40) placed in the slots, the reluctance being calibrated by the total volume of ferrite used and by the type of ferrites used.

5. Induction cooking surface according to Claims 2 and 4, characterized in that the support (15) is made of a thermally conducting material so as to allow heat transfer between the inductor and the plate.

FIG.1

FIG.2

FIG.3

FIG.4

FIG.5